# FASCICULE DE BREVET EUROPEEN

(11) **EP 2 364 895 B1**
(45) Date de publication et mention de la délivrance du brevet: **03.10.2012**
(21) Numéro de dépôt: 11156779.8
(22) Date de dépôt: 03.03.2011
(51) Int. Cl.: B62D 3/12, F16H 55/28

(54) **Dispositif de poussoir pour direction à crémaillère de véhicule automobile**
Druckstück für eine Zahnstangenlenkung eines Kraftfahrzeugs
Pressure yoke for a rack-and-pinion steering system of an automobile

(30) Priorité: 08.03.2010 FR 1051646
(43) Date de publication de la demande: 14.09.2011
(73) Titulaire: Jtekt Europe, 69540 Irigny (FR)
(72) Inventeur: Landron, Jérôme, 21560, Couternon (FR)
(74) Mandataire: Chevalier, Renaud Philippe

(56) Documents cités:
- EP-A2- 0 860 345

## Description

La présente invention se rapporte, d'une manière générale, aux systèmes de direction des véhicules automobiles, qui sont habituellement des directions à crémaillère. Plus particulièrement, cette invention concerne un dispositif de poussoir pour une direction à crémaillère de véhicule automobile.

Dans la plupart des systèmes de direction actuels des véhicules automobiles, un pignon de direction est lié en rotation avec une colonne de direction, manoeuvrée à l'aide du volant de conduite du véhicule, le pignon étant en prise avec une crémaillère qui est montée coulissante en direction longitudinale dans un carter de direction. Les deux extrémités de la crémaillère, extérieures au carter, sont accouplées respectivement à deux biellettes de direction, qui sont elles-mêmes associées respectivement aux roues directrices gauche et droite du véhicule. Ainsi, la rotation du volant dans un sens ou dans l'autre, transmise par la colonne de direction jusqu'au pignon, est convertie en une translation correspondante de la crémaillère qui, par l'intermédiaire des biellettes, provoque l'orientation des roues directrices pour un braquage à droite ou pour un braquage à gauche. Le système de direction peut encore comprendre un dispositif d'assistance, par exemple hydraulique ou électrique, qui amplifie l'effort manuel exercé par le conducteur du véhicule sur le volant, l'assistance pouvant s'exercer sur la colonne de direction ou sur le pignon de direction, ou encore directement sur la crémaillère par un second pignon par exemple.

Dans un tel système de direction, le mécanisme pignon-crémaillère, lié aux roues directrices du véhicule par l'intermédiaire des biellettes, est soumis à des remontées d'efforts, à des chocs et à des vibrations, suivant l'état de la chaussée parcourue par le véhicule. En raison de l'angle formé par les biellettes avec la crémaillère, il peut alors se produire un effort sur la crémaillère, qui risque de l'écarter du pignon de direction et, éventuellement, du second pignon appartenant au dispositif d'assistance.

Dans ces conditions, pour maintenir en permanence un bon contact entre la crémaillère et le ou les pignons, il est habituellement prévu un organe mécanique désigné comme « poussoir », lequel agit élastiquement sur le dos de la crémaillère à proximité du pignon considéré, pour presser fortement la denture de cette crémaillère contre le pignon. Ainsi, le poussoir limite le jeu entre les dentures respectives du pignon et de la crémaillère, et ce poussoir contrôle aussi l'effort de coulissement de la crémaillère dans le carter. L'action du poussoir compense également d'éventuels défauts de rectitude de la crémaillère. Le poussoir doit encore assurer des fonctions de suspension, d'amortissement et de compensation d'usure. Ce poussoir doit en outre être, autant que possible, silencieux dans son fonctionnement.

Dans sa forme de réalisation actuelle la plus courante, le poussoir est un corps rigide, de forme générale cylindrique, qui est monté coulissant suivant une direction sensiblement perpendiculaire à l'axe longitudinal de la crémaillère, dans un logement délimité par une partie de carter correspondante de forme cylindrique. Ce corps est sollicité contre le dos de la crémaillère par des moyens à ressort, tels qu'un ressort hélicoïdal ou des rondelles élastiques. De plus, une vis de calage permet de positionner axialement ledit corps, en réglant la compression des moyens à ressort et le jeu axial de ce corps. A titre d'exemples d'une telle réalisation de poussoir, il est fait référence aux documents de brevets FR 2 851 540 et EP 0 860 345.

La présente invention a pour but d'améliorer la fonction de calage du poussoir, en rendant les opérations manuelles de réglage et calage plus aisées et plus simples, notamment pour réduire le temps de calage du poussoir sur une ligne de production industrielle.

A cet effet, l'invention a pour objet un dispositif de poussoir pour direction à crémaillère de véhicule automobile, avec un corps de forme générale cylindrique monté coulissant dans une partie de carter suivant une direction sensiblement perpendiculaire à l'axe longitudinal de la crémaillère, et sollicité contre le dos de la crémaillère par des moyens à ressort, tandis qu'une vis de calage est vissée dans la partie de carter précitée, les moyens à ressort étant comprimés la vis de calage et le corps de forme générale cylindrique, le dispositif de poussoir étant caractérisé par le fait qu'une rondelle d'ajustement, manoeuvrable en rotation, est intercalée entre la vis de calage et les moyens à ressort, la rondelle d'ajustement étant déplaçable entre une première position angulaire dite de réglage, imposant une distance axiale maximale entre la vis de calage et le corps, et une seconde position angulaire, dite de roulage, permettant une réduction de cette distance axiale en créant un jeu axial.

Dans un mode de réalisation préféré de ce dispositif de poussoir, les faces en regard respectives de la vis de calage et de la rondelle d'ajustement présentent des secteurs, alternativement en relief et en creux, tels que la position angulaire relative de la vis de calage et de la rondelle d'ajustement permet de modifier la distance axiale entre ces deux éléments.

Dans le principe, une paire de secteurs en relief est ici suffisante. Cependant, un nombre de secteurs plus élevé procure une meilleure répartition des charges.

La rondelle d'ajustement peut comporter, dans sa région centrale, une fente diamétrale permettant de la manoeuvrer en rotation à l'aide d'un outil du genre tournevis, la vis de calage présentant un orifice central pour l'introduction de l'outil.

En variante, la rondelle d'ajustement comporte dans sa région centrale un trou polygonal, par exemple hexagonal, permettant de la manoeuvrer en rotation à l'aide d'un outil du genre clé, la vis de calage présentant dans ce cas également un orifice central pour l'introduction de l'outil.

Avantageusement, l'orifice central de la vis de réglage est un orifice de forme non circulaire, prévu pour recevoir une pièce obturatrice de forme correspondante, apte à immobiliser en rotation la rondelle d'ajustement relativement à la vis de calage dans la position de roulage.

Ainsi l'ajout d'une rondelle qui présente des surépaisseurs, en forme de secteurs, permet de réaliser l'opération de calage comme suit : la vis du poussoir est d'abord serrée à fond, en entraînant en rotation avec elle la rondelle d'ajustement, pour comprimer les moyens à ressort ; ensuite, la rondelle d'ajustement est tournée, par exemple à l'aide d'un tournevis, d'un angle égal à la valeur d'un secteur (par exemple de 90°, dans le cas de quatre secteurs), ce qui crée un dégagement axial ; enfin, un obturateur est mis en place pour « figer » en rotation la rondelle d'ajustement. Le jeu obtenu dépend des surépaisseurs que représentent les secteurs en relief de la vis de calage et de la rondelle d'ajustement, ce jeu pouvant être de l'ordre d'un dixième de millimètre. Ce jeu est ainsi donné par des épaisseurs de composants, et obtenu par la simple utilisation d'un tournevis, et non pas obtenu par une course de vissage avec nécessité d'utiliser une jauge de profondeur. En conséquence de cette simplicité et facilité de réglage du jeu du poussoir, le temps de calage du poussoir sur la ligne de production de véhicules est réduit, et les interventions ultérieures sur le véhicule peuvent être faites sans démonter la direction de ce véhicule.

L'invention sera mieux comprise à l'aide de la description qui suit, en référence au dessin schématique annexé représentant, à titre d'exemple, une forme d'exécution de ce dispositif de poussoir pour direction à crémaillère de véhicule automobile.
Figure 1 est une vue d'ensemble, en coupe, d'un dispositif de poussoir conforme à la présente invention, incorporé à un système de direction,
Figure 2 est une vue en perspective éclatée de ce dispositif de poussoir,
Figures 3 et 4 montrent la vis de calage et la rondelle d'ajustement, dans une première position relative,
Figures 5 et 6 montrent la vis de calage et la rondelle d'ajustement, dans une seconde position relative,
Figure 7 montre, à échelle agrandie, le détail D de la figure 1, dans la position de réglage,
Figure 8 est une vue similaire à la figure 7, mais illustrant la position de roulage.

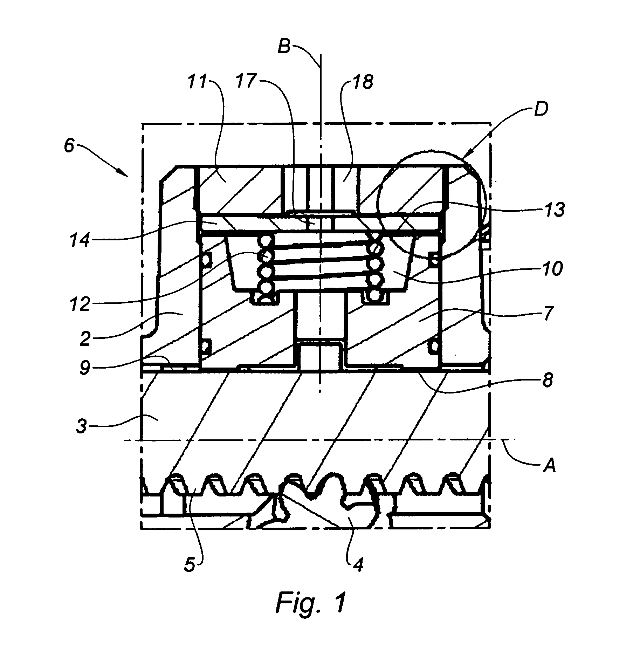

La figure 1 montre, très partiellement, un système de direction de véhicule automobile, avec une partie du carter de direction 2 dans lequel est montée coulissante, suivant un axe longitudinal A, une crémaillère 3. Un pignon de direction 4, lié en rotation à la colonne de direction (non représentée), engrène avec la denture 5 de la crémaillère 3. Un dispositif de poussoir, désigné dans son ensemble par la référence 6, est prévu à l'opposé du pignon de direction 4, pour presser la denture 5 de la crémaillère 3 contre le pignon de direction 4, le dispositif de poussoir 6 étant logé dans une partie correspondante du carter de direction 2.

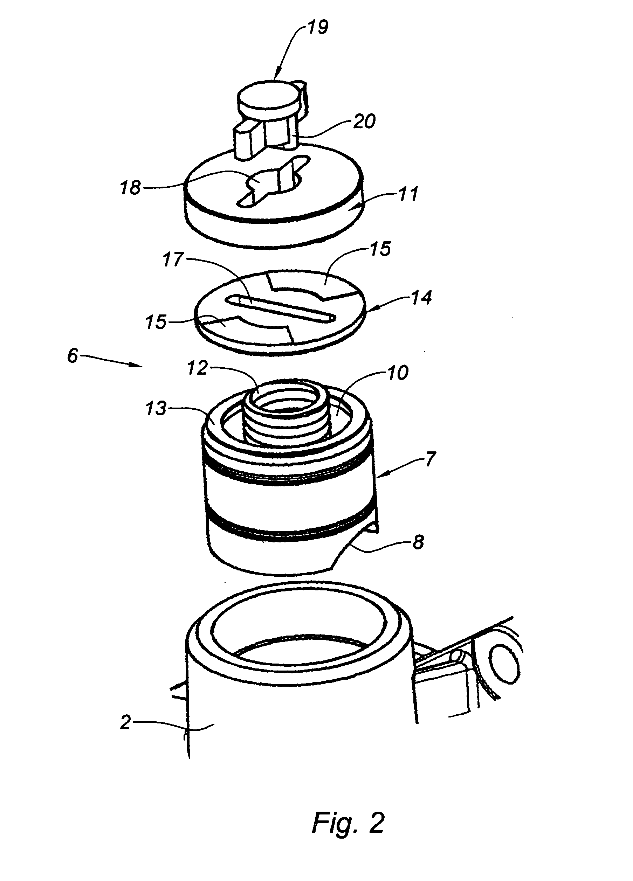

Comme le montrent plus en détails les figures 2 et suivantes, le dispositif de poussoir 6 comprend un corps de poussoir 7, monté coulissant dans la partie considérée du carter de direction 2, suivant un axe B sensiblement perpendiculaire à l'axe longitudinal A de la crémaillère 3. De forme générale cylindrique, le corps de poussoir 7 possède une extrémité 8 de configuration concave, appliquée contre le dos 9 de la crémaillère 3, c'est-à-dire contre la face de cette crémaillère opposée à sa denture 5. A son autre extrémité, le corps de poussoir 7 présente un évidement central 10, ici de forme tronconique.

La partie considérée du carter de direction 2 est fermée par une vis de calage 11, vissée plus ou moins profondément dans un filetage intérieur de cette partie de carter. Entre la vis de calage 11 et le corps de poussoir 7 sont disposés des moyens à ressort, lesquels comprennent :
- d'une part, un ressort hélicoïdal de compression 12, logé dans l'évidement central 10 du corps de poussoir 7,
- d'autre part, une rondelle élastique 13, appuyée contre la périphérie du corps de poussoir 7.

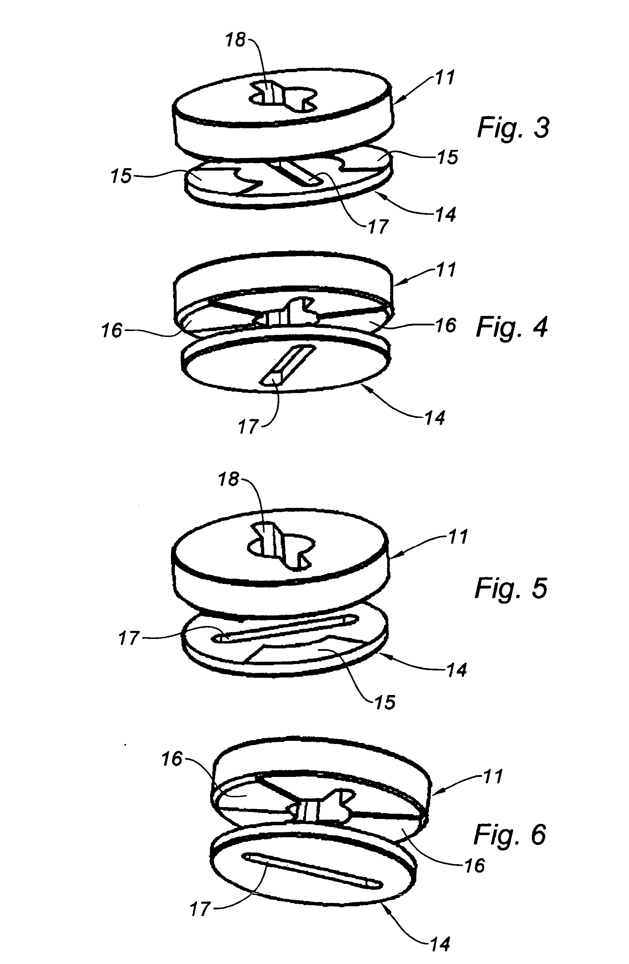

Une rondelle d'ajustement 14 est intercalée entre la vis de calage 11, d'une part, et les moyens à ressort, à savoir le ressort 12 et la rondelle élastique 13, d'autre part. De forme générale circulaire, la rondelle d'ajustement 14 présente deux secteurs en relief 15, diamétralement opposés et occupant chacun un angle de 90°, sur sa face tournée vers la vis de calage 11. D'une manière complémentaire, la vis de calage 11 présente elle aussi, sur sa face tournée vers la rondelle d'ajustement 14, deux secteurs en relief 16 diamétralement opposés, occupant chacun un angle de 90° (voir en particulier les figures 4 et 6).

Dans sa zone centrale, la rondelle d'ajustement 14 comporte une fente diamétrale 17. La vis de calage 11 présente un orifice central 18, dont le contour est celui d'une fente diamétrale oblongue qui est élargie en son milieu en forme de trou circulaire.

Enfin, le dispositif de poussoir 6 comporte une pièce obturatrice 19, dont le contour correspond à celui de l'orifice central 18 de la vis de calage 11. La pièce obturatrice 19 comporte, dans sa partie inférieure, un bossage transversal 20 qui s'étend perpendiculairement à la direction principale d'extension de cette pièce obturatrice 19.

Compte tenu de la présence de la rondelle d'ajustement 14, le ressort 12 prend appui par une extrémité contre la zone centrale de ladite rondelle d'ajustement 14, tandis que la rondelle élastique 13 prend appui contre la zone périphérique de cette rondelle d'ajustement 14. La rondelle d'ajustement 14 est manoeuvrable en rotation, depuis l'extérieur, à l'aide d'un outil tel qu'un tournevis, introduit au travers de l'orifice central 18 de la vis de calage 11, et engagé dans la fente diamétrale 17 de ladite rondelle d'ajustement 14. Ainsi, la rondelle d'ajustement 14 peut occuper, relativement à la vis de calage 11, deux positions angulaires remarquables :
- Dans une première position angulaire, dite de réglage, les secteurs en relief 15 de la rondelle d'ajustement 14 viennent en appui contre les secteurs en relief 16 de la vis de calage 11, de sorte que la rondelle d'ajustement 14 se trouve écartée axialement de la vis de calage 11 (voir en particulier les figures 3 et 4).
- Dans une seconde position angulaire, dite de roulage, les secteurs en relief 15 de la rondelle d'ajustement 14 viennent s'imbriquer entre les secteurs en relief 16 de la vis de calage 11, de sorte que la rondelle d'ajustement 14 se trouve rapprochée axialement de la vis de calage 11 (voir en particulier les figures 5 et 6).

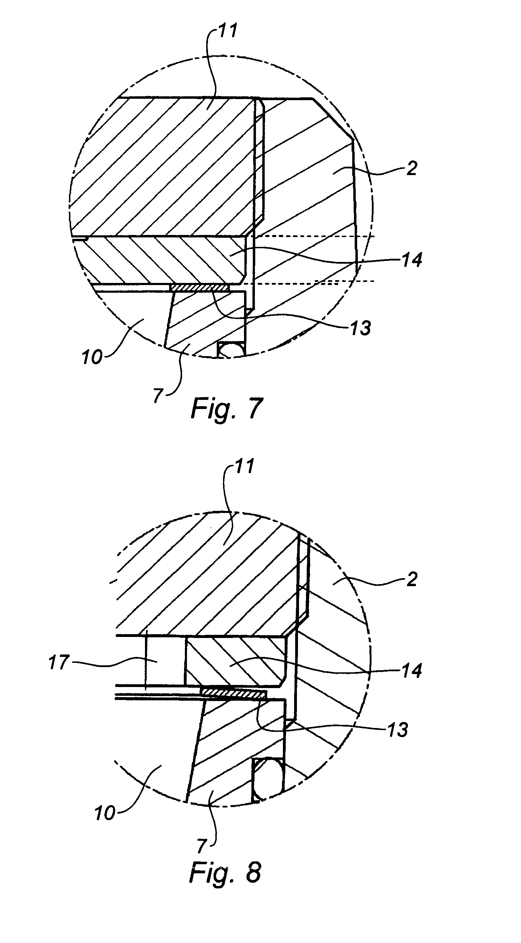

Dans la première de ces positions angulaires, la vis de calage 11 est d'abord serrée à fond, entraînant avec elle la rondelle d'ajustement 14. Les moyens à ressort, à savoir le ressort hélicoïdal 12 et la rondelle élastique 13, sont alors comprimés au maximum - voir figure 7.

Ensuite, à l'aide de l'outil tel que tournevis, l'opérateur fait tourner la rondelle d'ajustement 14 de 90° autour de l'axe B, de sorte que les secteurs en relief 15 de cette rondelle viennent s'imbriquer entre les secteurs en relief 16 de la vis de calage 11, restée immobilisée. On atteint ainsi la position de roulage, dans laquelle la compression du ressort hélicoïdal 12 et de la rondelle élastique 13 est partiellement relâchée, un certain jeu axial étant alors obtenu pour le corps de poussoir 7 (voir figure 8). Le dispositif de poussoir 6 est ainsi « calé ».

Enfin, dans cette position de roulage, la rondelle d'ajustement 14 est immobilisée en rotation par la mise en place de la pièce obturatrice 19 dans l'orifice central 18 de la vis de calage 11, le bossage 20 de la pièce obturatrice 19 s'engageant alors dans la fente diamétrale 17 de la rondelle d'ajustement 14.

On ne s'éloignerait pas du cadre de l'invention, telle que définie dans les revendications annexées :
- en modifiant les détails de forme des composants du dispositif de poussoir,
- en augmentant le nombre des secteurs en relief de la rondelle d'ajustement et de la vis de calage,
- en remplaçant la fente diamétrale de la rondelle d'ajustement par un trou d'une autre forme, adapté à un outil particulier, par exemple un trou hexagonal permettant de manoeuvrer ladite rondelle à l'aide d'une clé,
- en prévoyant tous types et combinaisons de moyens à ressort prenant appui sous la rondelle d'ajustement,
- en destinant ce dispositif de poussoir à des systèmes de direction de tous types, pouvant être des directions manuelles ou des directions assistées, elles-mêmes de type hydraulique ou électrique.

## Revendications

1. Dispositif de poussoir pour direction à crémaillère de véhicule automobile, avec un corps (7) de forme générale cylindrique monté coulissant dans une partie de carter (2) suivant une direction (B) sensiblement perpendiculaire à l'axe longitudinal (A) de la crémaillère (3), et sollicité contre le dos (9) de la crémaillère par des moyens à ressort (12, 13), tandis qu'une vis de calage (11) est vissée dans la partie de carter (2) précitée, les moyens à ressort (12, 13) étant comprimés entre la vis de calage (11) et le corps (7) de forme générale cylindrique, **caractérisé en ce qu'**une rondelle d'ajustement (14), manoeuvrable en rotation, est intercalée entre la vis de calage (11) et les moyens à ressort (12, 13), la rondelle d'ajustement (14) étant déplaçable entre une première position angulaire, dite de réglage, imposant une distance axiale maximale entre la vis de calage (11) et le corps (7), et une seconde position angulaire, dite de roulage, permettant une réduction de cette distance axiale en créant un jeu axial.

2. Dispositif de poussoir selon la revendication 1, **caractérisé en ce que** les faces en regard respectives de la vis de calage (11) et de la rondelle d'ajustement (14) présentent des secteurs, alternativement en relief (15, 16) et en creux, tels que la position angulaire relative de la vis de calage (11) et de la rondelle d'ajustement (14) permet de modifier la distance axiale entre ces deux éléments.

3. Dispositif de poussoir selon la revendication 2, **caractérisé en ce que** les faces en regard respectives de la vis de calage (11) et de la rondelle d'ajustement (14) présentent, chacune, deux secteurs en relief (15, 16), chaque secteur s'étendant sur un angle de 90°.

4. Dispositif de poussoir selon l'une des revendications 1 à 3, **caractérisé en ce que** la rondelle d'ajustement (14) comporte, dans sa région centrale, une fente diamétrale (17) permettant de la manoeuvrer en rotation à l'aide d'un outil du genre tournevis, la vis de calage (11) présentant un orifice central (18) pour l'introduction de l'outil.

5. Dispositif de poussoir selon l'une des revendications 1 à 3, caractérisé en que la rondelle d'ajustement (14) comporte dans sa région centrale un trou polygonal, par exemple hexagonal, permettant de la manoeuvrer en rotation à l'aide d'un outil du genre clé, la vis de calage (11) présentant un orifice central pour l'introduction de l'outil.

6. Dispositif de poussoir selon la revendication 4 ou 5, **caractérisé en ce que** l'orifice central (18) de la vis de réglage (11) est un orifice de forme non circulaire, prévu pour recevoir une pièce obturatrice (19) de forme correspondante, apte à immobiliser en rotation la rondelle d'ajustement (14) relativement à la vis de calage (11) dans la position de roulage.

7. Dispositif de poussoir selon les revendications 4 et 6, **caractérisé en ce que** la pièce obturatrice (19) comporte, dans sa partie inférieure, un bossage transversal (20) qui, en position de roulage, est engagé dans la fente diamétrale (17) de la rondelle d'ajustement (14).

## Claims

1. A pusher device for a motor vehicle rack and pinion steering, with a body (7) of a general cylindrical shape slideably mounted in a case (2) portion along a direction (B) substantially perpendicular to the longitudinal axis (A) of the rack and pinion (3), and urged against the back (9) of the rack and pinion by spring means (12, 13), while a blocking screw (11) is screwed into the aforementioned case (2) portion, the spring means (12, 13) being compressed between the blocking screw (11) and the body (7) with a general cylindrical shape, **characterized in that** a rotatably maneuverable adjustment washer (14) is interposed between the blocking screw (11) and the spring means (12,13), the adjustment washer (14) being displaceable between a first angular position, a so-called adjustment position, imposing a maximum axial distance between the blocking screw (11) and the body (7), and a second angular position, a so-called rolling position, allowing a reduction of this axial distance by generating axial play.

2. The pusher device according to claim 1, **characterized in that** the respective opposite faces of the blocking screw (11) and of the adjustment washer (14) have alternately raised (15, 16) and recessed sectors, such that the relative angular position of the blocking screw (11) and of the adjustment washer (14) allows modification of the axial distance between both of these elements.

3. The pusher device according to claim 2, **characterized in that** the respective opposite faces of the blocking screw (11) and of the adjustment washer (14) each have two recessed sectors (15, 16), each sector extending over an angle of 90°.

4. The pusher device according to one of claims 1 to 3, **characterized in that** the adjustment washer (14) includes, in its central region, a diametrical slot (17) allowing it to be maneuvered in rotation by means of a tool of the screwdriver kind, the blocking screw (11) having a central orifice (18) for introducing the tool.

5. The pusher device according to one of claims 1 to 3, **characterized in that** the adjustment washer (14) includes in its central region, a polygonal, for example, hexagonal hole, allowing it to be maneuvered in rotation by means of a tool of the wench kind, the blocking screw (11) having a central orifice for introducing the tool.

6. The pusher device according to claim 4 or 5, **characterized in that** the central orifice (18) of the adjustment screw (11) is an orifice with a non-circular shape, provided for receiving an obturating part (19) with a matching shape, capable of immobilizing in rotation the adjustment washer (14) relatively to the blocking screw (11) in the rolling position.

7. The pusher device according to claims 4 and 6, **characterized in that** the obturating part (19) includes, in its lower portion, a transverse boss (20), which, in the rolling position is engaged into the diametrical slot (17) of the adjustment washer (14).

## Patentansprüche

1. Druckstück für Zahnstangenlenkung eines Kraftfahrzeugs mit einem allgemein zylindrisch geformten Körper (7), der gemäß einer Richtung (B) etwa senkrecht zur Längsachse (A) der Zahnstange (3) in einem Gehäuseabschnitt (2) verlagerbar montiert ist und gegen den Rücken (9) der Zahnstange durch Federmittel (12, 13) beansprucht wird, wogegen eine Andrückschraube (11) in den vorgenannten Gehäuseabschnitt (2) geschraubt ist, wobei die Federmittel (12, 13) zwischen der Andrückschraube (11) und dem allgemein zylindrisch geformten Körper (7) komprimiert sind, **dadurch gekennzeichnet, dass** eine rotierend manövrierbare Justierscheibe (14) zwischen der Andrückschraube (11) und den Federmittel (12, 13) zwischengestellt ist, wobei die Justierscheibe (14) zwischen einer ersten sogenannten Regulierungs-Winkelposition, die einen maximalen axialen Abstand zwischen der Andrückschraube (11) und dem Körper (7) verlangt, und einer zweiten sogenannten Fahr-Winkelposition, die einer Verringerung dieses axialen Abstands durch Bildung eines axialen Spiels erlaubt, verlagerbar ist.

2. Druckvorrichtung nach Anspruch 1, **dadurch gekennzeichnet, dass** die jeweiligen gegenüberliegenden Seiten der Andrückschraube (11) und der Justierscheibe (14) abwechselnd Relief- (15, 16) und hohle Sektoren aufweisen, so dass die relative Winkelposition der Andrückschraube (11) und der Justierscheibe (14) erlaubt, den axialen Abstand zwischen diesen beiden Elementen zu verändern.

3. Druckvorrichtung nach Anspruch 2, **dadurch gekennzeichnet, dass** die jeweiligen gegenüberliegenden Seiten der Andrückschraube (11) und der Justierscheibe (14) jeweils zwei Reliefsektoren (15, 16) aufweisen, wobei sich jeder Sektor über einen Winkel von 90° erstreckt.

4. Druckvorrichtung nach einem der Ansprüche 1 bis 3, **dadurch gekennzeichnet, dass** die Justierscheibe (14) in ihrer zentralen Region einen diametralen Schlitz (17) aufweist, der es erlaubt, sie mit Hilfe eines Werkzeugs in der Art eines Schraubendrehers rotierend zu bewegen, wobei die Andrückschraube (11) eine zentrale Öffnung (18) zum Einführen des Werkzeugs aufweist.

5. Druckvorrichtung nach einem der Ansprüche 1 bis 3, **dadurch gekennzeichnet, dass** die Justierscheibe (14) in ihrer zentralen Region ein polygonales, beispielsweise sechseckiges, Loch aufweist, das es erlaubt, sie mit Hilfe eines Werkzeugs in der Art eines Schlüssels rotierend zu bewegen, wobei die Andrückschraube (11) eine zentrale Öffnung zum Einführen des Werkzeugs aufweist.

6. Druckvorrichtung nach Anspruch 4 oder 5, **dadurch gekennzeichnet, dass** die zentrale Öffnung (18) der Regulierschraube (11) eine nicht kreisrund geformte Öffnung ist, die vorgesehen ist, um ein entsprechend geformtes Verschlussteil (19) aufzunehmen, das imstande ist, in der Fahrstellung die Justierscheibe (14) relativ zur Andrückschraube (11) in Rotation festzustellen.

7. Druckvorrichtung nach den Ansprüchen 4 und 6, **dadurch gekennzeichnet, dass** das Verschlussteil (19) in seinem unteren Abschnitt einen transversalen Vorsprung (20) umfasst, der in Fahrstellung in den diametralen Schlitz (17) der Justierscheibe (14) eingreift.
